**Europäisches Patentamt**

**European Patent Office**

**Office européen des brevets**

(19)

(11) Veröffentlichungsnummer: **0 189 021**
**A2**

(12) **EUROPÄISCHE PATENTANMELDUNG**

(21) Anmeldenummer: 85890290.1

(22) Anmeldetag: 27.11.85

(51) Int. Cl.⁴: **G 01 M 3/26**

(30) Priorität: 21.12.84 AT 4077/84

(43) Veröffentlichungstag der Anmeldung: 30.07.86
Patentblatt 86/31

(84) Benannte Vertragsstaaten: **BE DE FR GB IT**

(71) Anmelder: **VOEST-ALPINE Aktiengesellschaft,
Muldenstrasse 5, A-4020 Linz (AT)**

(72) Erfinder: **Schellenberg, Eduard, Dipl.-Ing.,
Liebermannweg 32, A-4020 Linz (AT)**
Erfinder: **Steinbrucker, Gerhard, Dipl.-Ing.,
Bessemerstrasse 30, A-8740 Zeltweg (AT)**

(74) Vertreter: **Matschnig, Franz, Dipl.-Ing.,
Siebensterngasse 54 Postfach 452, A-1071 Wien (AT)**

(54) Verfahren und Vorrichtung zur Ermittlung eines der Leckage einer Hydraulikpumpe oder eines Hydraulikmotors proportionalen Pumpenzustandssignales.

(57) Dieses Verfahren dient zur Ermittlung eines der Leckage einer Hydraulikpumpe oder eines Hydraulikmotors proportionalen Pumpenzustandssignales mit einem Durchflussensor und einem Drucksensor in der Ab- bzw. Zuleitung des Hydraulikmittels zur Ermittlung eines Durchflussignales und eines Drucksignales.

Um Informationen über den Zustand und damit z.B. über die zu erwartende Restlebensdauer der Pumpe oder des Motors zu gewinnen ist vorgesehen, dass das Durchflussignal sowie das Drucksignal über eine vorgegebene Integrationszeit integriert werden, ein dem Pumpen- bzw. Motorleerlauf entsprechendes Leerlauf-Durchflussignal mit der Integrationszeit multipliziert und die Differenz zwischen diesem Produkt und dem integrierten Durchflussignal gebildet wird und schliesslich diese Differenz durch das integrierte Drucksignal dividiert wird.

Verfahren und Vorrichtung zur Ermittlung eines der Leckage einer Hydraulikpumpe oder eines Hydraulikmotors proportionalen Pumpenzustandssignales

Die Erfindung bezieht sich auf ein Verfahren zur Ermittlung eines der Leckage einer Hydraulikpumpe oder eines Hydraulikmotors proportionalen Pumpenzustandssignales mit einem Durchflußsensor und einem Drucksensor in der Ab- bzw. Zuleitung des Hydraulikmittels zur Ermittlung eines Durchflußsignales und eines Drucksignales.

Bei Hydraulikpumpen und -motoren tritt durch Abnützungserscheinungen im Laufe der Zeit eine erhöhte Leckage auf. Durch Defekte kann die Leckage auch plötzlich ansteigen. Die Leckage (oder auch Leckfluß) ist abhängig von dem Druck des Hydraulikflüssigkeit auf der Druckseite des Motors oder der Pumpe. Sie setzt sich aus einem internen Anteil sowie aus einem externen (aus der Pumpe oder dem Motor austretende Hydraulikflüssigkeit) zusammen.

Ziel der Erfindung ist es, ein Signal zu gewinnen, daß der Leckage proportional ist und Aufschluß über den Pumpenzustand gibt.

Dieses Ziel läßt sich mit einem Verfahren der eingangs genannten Art erreichen, bei welchem erfindungsgemäß das Durchflußsignal sowie das Drucksignal über eine vorgegebene Integrationszeit integriert werden, ein dem Pumpen- bzw. Motorleerlauf entsprechendes Leerlauf-Durchflußsignal mit der Integrationszeit multipliziert und die Differenz zwischen diesem Produkt und dem integrierten Durchflußsignal gebildet wird und schließlich diese Differenz durch das
integrierte Drucksignal dividiert wird.

Durch dieses Verfahren kann jederzeit der Zustand der
Pumpe oder des Motors angezeigt bzw. festgestellt werden.
Bei oder vor Erreichen eines bestimmten maximal zulässigen
Wertes dieses Signals kann die Pumpe z.B. ausgewechselt
werden. Wenn das Pumpenzustandssignal in Abhängigkeit von
der Zeit stärker ansteigt als für eine bestimmte Pumpe
charakteristisch, läßt dies auf einen erhöhten Verschleiß
oder einen Defekt schließen. Die Erfindung ermöglicht somit
nicht nur die Anzeige von Defekten sondern auch die Vorhersage der Restlebensdauer oder von möglichen Defekten einer
Hydraulikpumpe oder -motors, sodaß im Sinne größtmöglichster
Wirtschaftlichkeit und/oder Betriebssicherheit die erforderlichen Maßnahmen getroffen werden können.

Eine geringfügige Modifikation der Erfindung ist dadurch
gekennzeichnet, daß die Differenz zwischen einem dem
Pumpen- bzw. Motorleerlauf entsprechenden Leerlauf-Durchflußsignal und dem Durchflußsignal sowie das Drucksignal
über eine vorgegebene Integrationszeit integriert werden
und die integrierte Differenz durch das integrierte Drucksignal dividiert wird.

Eine Anordnung zur Ermittlung eines der Leckage einer Hydraulik
pumpe oder eines Hydraulikmotors proportionalen Pumpenzustandsignales, wobei in der Ab- bzw. Zuleitung des Hydraulikmittels ein Durchflußsensor sowie ein Drucksensor vorgesehen
sind, zeichnet sich erfindungsgemäß dadurch aus, daß der
Ausgang des Drucksensors mit dem Eingang eines ersten
Integrierers verbunden ist, der zur Integration des Drucksignales über eine vorbestimmte Integrationszeit eingerichtet ist, daß der Ausgang des Durchflußsensors mit dem Eingang eines zweiten Integrierers verbunden ist, der zur Integration des Durchflußsignales über die Integrationszeit eingerichtet ist, daß ein Multiplizierer vorgesehen ist, dem ein dem Pumpen- bzw. Motorleerlauf entsprechendes Leerlauf-Durchflußsignal zugeführt ist und der zur Multiplikation dieses Signales mit der Integrationszeit eingerichtet ist, daß ein Subtrahierer vorgesehen ist, dessen Eingänge mit dem Ausgang des Multiplizierers und mit dem Ausgang des zweiten Integrierers verbunden sind und daß ein Dividierer vorgesehen ist, dessen Eingänge mit dem Ausgang des Subtrahierers und mit dem Ausgang des ersten Integrierers verbunden sind.

In Abwandlung dieser Anordnung ist es auch möglich, daß der Ausgang des Durchflußsensors mit einem Eingang eines Subtrahierers verbunden ist, dessem anderen Eingang ein dem Pumpen- bzw. Motorleerlauf entsprechendes Leerlauf-Durchflußsignal zugeführt ist, daß der Ausgang des Drucksensors mit dem Eingang eines ersten Integrierers und der Ausgang des Subtrahierers mit dem Eingang eines zweiten Integrierers verbunden sind, wobei beide Integrierer zur Integration ihrer Eingangssignale über eine vorbestimmte Integrationszeit eingerichtet sind, und daß ein Dividierer vorgesehen ist, dessen Eingänge mit den Ausgängen des zweiten Integrierers sowie des ersten Integrierers verbunden sind.

Die Erfindung samt ihren weiteren Vorteilen und Merkmalen ist im folgenden an Hand von Ausführungsbeispielen näher erläutert, die in der Zeichnung veranschaulicht sind. In dieser zeigen Fig. 1 in einem Diagramm die Abhängigkeit der Leckage vom Druck, Fig. 2 in einem Blockschaltbild eine Anordnung nach der Erfindung, Fig. 2a eine leicht modifizierte Anordnung und Fig. 3 das Schema eines Prozeßrechner- oder Mikroprozessor-Systems zur Ermittlung des Pumpenzustandsignales.

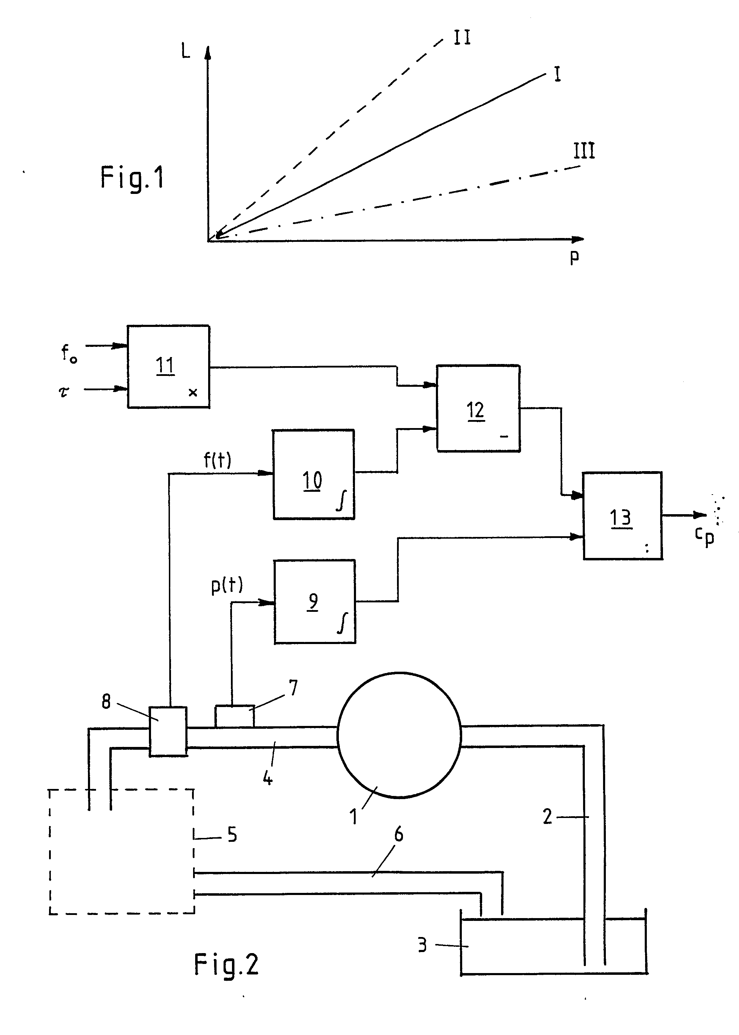

In dem Diagramm nach Fig. 1 ist die Abhängigkeit der Leckage L einer Hydraulikpumpe oder eines Hydraulikmotors von dem Druck p auf der Druckseite einer Pumpe oder eines Motors angegeben. Wie ersichtlich, ist die Leckage L im wesentlichen linear vom Druck p abhängig, wobei im Leerlauf der Pumpe oder des Motors (p=0) die Leckage gleich Null ist. Die Gerade I entspricht z.B. einer durchschnittlichen Pumpe bzw. einer Pumpe in durchschnittlichem Zustand, die Gerade II mit stärkerem Anstieg entspricht einer schlechteren Pumpe und die Gerade III einer besseren Pumpe. Die Leckage L läßt sich somit als

$$L(t) = c_p \cdot p(t) \qquad (1)$$

darstellen, worin $c_p$ den Pumpenzustandsfaktor bedeutet.

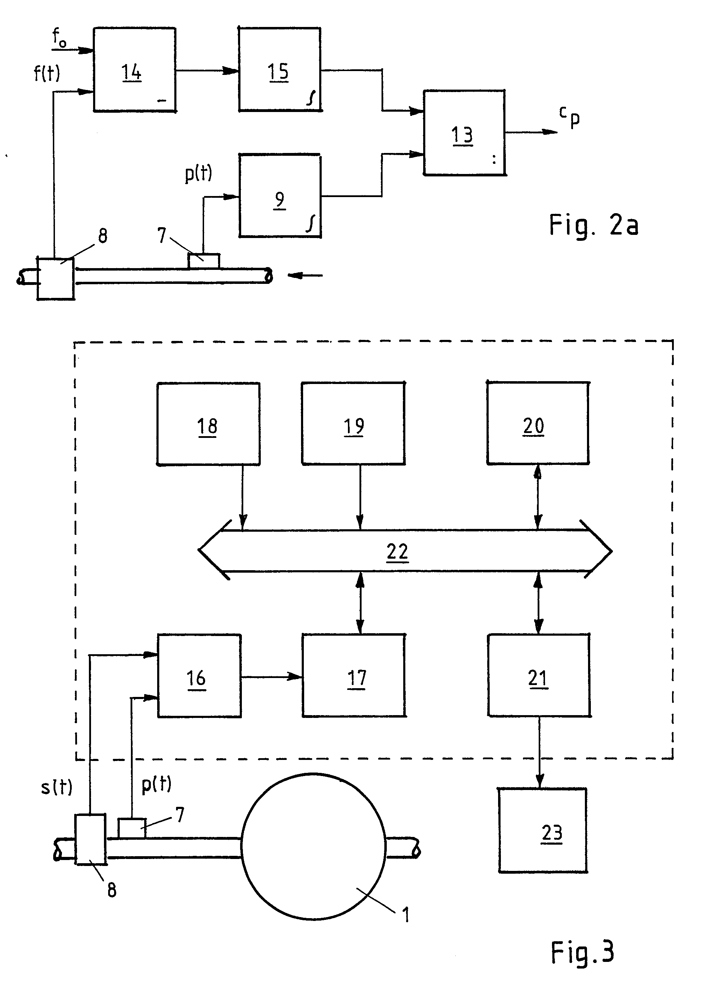

In Fig. 2 ist eine Pumpe 1 dargestellt, die über eine Leitung 2 Hydraulikflüssigkeit aus einem Reservoir 3 ansaugt und über eine Druckleitung 4 an einem nicht näher dargestellten Verbraucher 5 liefert. Von dem Verbraucher 5 fließt die Hydraulikflüssigkeit über eine Leitung 6 wieder in das Reservoir 3 zurück.

Für den Gesamtfluß in der Leitung 4 läßt sich folgende Mengenbilanz über einen Zeitraum $\tau$ aufstellen:

$$\int_0^\tau f(t)\,dt = f_0 \cdot \tau - \int_0^\tau p(t) \cdot c_p \cdot dt \qquad (2)$$

Hierin bedeuten:

| | |
|---|---|
| $f_0$ | Pumpendurchfluß im Leerlauf |
| $f(t)$ | gemessener Hydraulikfluß (1/min) |
| $p(t)$ | gemessener Hydraulikdruck (bar) |
| $\tau$ | willkürlich gewählte Integrationszeit, z.B. 5 mi |

$$\int_o^{\tau} f(t)\,dt \qquad \text{Gesamtfluß während der Zeit } \tau$$

$$f_o \cdot \tau \qquad \text{Leerlauffluß während der Zeit } \tau$$

$$\int_o^{\tau} p(t) \cdot c_p \cdot dt \qquad \text{Leckage während der Zeit } \tau$$

Aus (2) läßt sich der Pumpenzustandsfaktor $c_p$ errechnen:

$$c_p = \frac{f_o \cdot \tau - \int_o^{\tau} f(t)\,dt}{\int_o^{\tau} p(t)\,dt} \qquad (3)$$

In Fig. 2 ist auch eine mögliche Anordnung zur Ermittlung des Faktors $c_p$ dargestellt. In der Druckleitung 4 sind sowohl ein Drucksensor 7 als auch ein Durchflußsensor 8 angeordnet. Der Drucksensor 7 liefert ein Drucksignal $p(t)$, der Durchflußsensor ein Durchflußsignal $f(t)$.

Das Drucksignal $p(t)$ wird einem ersten Integrierer 9 zugeführt, der dieses Signal über die Zeit $\tau$ integriert und somit das Integral im Nenner des Bruches in Gleichung (3) bildet.

In gleicher Weise wird das Durchflußsignal $f(t)$ einem zweiten Integrierer 10 zugeführt, der das Signal $f(t)$ ebenfalls über die Zeit $\tau$ integriert, sodaß das Integral im Zähler des Bruches in Gleichung (3) gebildet wird.

Den beiden Eingängen eines Multiplizierers 11 sind ein (konstantes) Signal $f_o$, entsprechend dem Pumpendurchfluß im Leerlauf, sowie ein der Integrationszeit $\tau$ entsprechendes Signal zugeführt, sodaß das Produkt $f_o \cdot \tau$ gebildet wird.

Die Ausgänge des Multiplizierers 11 und des zweiten Integrierers 10 sind mit den Eingängen eines Subtrahierers 12 verbunden, dessen Ausgangssignal folglich dem Zähler in Gleichung (3) entspricht.

Die Eingänge eines Dividierers 13 sind schließlich mit den Ausgängen des Subtrahierers 12 und des Integrierers 9 verbunden, sodaß am Ausgang des Dividierers 13 das zu ermittelnde Pumpenzustandssignal $c_p$ auftritt.

Es ist anzumerken, daß Gleichung (3) auch angeschrieben werden kann als:

$$c_p = \frac{\int_0^{\mathcal{C}}(f_0 - f(t))\,dt}{\int_0^{\mathcal{C}} p(t)\,dt} \qquad (3')$$

Dies bedeutet, daß Integration und Subtraktion im Zähler vertauschbar sind und dementsprechend auch eine leicht abgewandelte Anordnung zur Ermittlung von $c_p$ verwendbar ist. Eine solche Anordnung ist in Fig. 2a gezeigt, die sich von jener nach Fig. 2 nur dadurch unterscheidet, daß in einem Subtrahierer 14 die Differenz $f_0 - f(t)$ gebildet wird und diese Differenz in einem Integrierer 15 entsprechend dem Zähler in der Gleichung (3') integriert wird.

Es versteht sich, daß zur Ermittlung des Faktors $c_p$ auch ein Prozeßrechner- oder Mikroprozessor-System herangezogen werden kann, dessen freie Kapazitäten überdies z.B. zur Bestimmung der Restlebensdauer der Pumpe verwendet werden können. Auch kann das Leerlauf-Durchflußsignal $f_0$ im Pumpen- bzw. Motorleerlauf ermittelt und abgespeichert werden. Das Schema eines solchen Prozeßrechners ist in Fig. 3 gezeigt. Die Ausgänge des Drucksensors 7 und des Durchflußsensors 8 sind einem Analog-Digital-Wandler 16 zugeführt, der an eine Prozeßschnittstelle 17 angeschlossen ist. Diese steht, ebenso wie eine Stromversorgungseinheit 18, eine Zentraleinheit 19, eine Speichereinheit 20 und eine serielle Schnittstelle 21, mit einem BUS-System 22 in Verbindung. Über

die Schnittstelle 21 ist ein Anzeigegerät 23 an den
Rechner angeschlossen, das einen Bildschirm, Drucker
od.dgl. aufweisen kann.

Patentansprüche
=================================

1. Verfahren zur Ermittlung eines der Leckage einer Hydraulikpumpe oder eines Hydraulikmotors proportionalen Pumpenzustandsignales mit einem Durchflußsensor und einem Drucksensor in der Ab- bzw. Zuleitung des Hydraulikmittels zur Ermittlung eines Durchflußsignales und eines Drucksignales, dadurch gekennzeichnet, daß das Durchflußsignal sowie das Drucksignal über eine vorgegebene Integrationszeit integriert werden, ein dem Pumpen- bzw. Motorleerlauf entsprechendes Leerlauf-Durchflußsignal mit der Integrationszeit multipliziert und die Differenz zwischen diesem Produkt und dem integrierten Durchflußsignal gebildet wird und schließlich diese Differenz durch das integrierte Drucksignal dividiert wird.

2. Verfahren zur Ermittlung eines der Leckage einer Hydraulikpumpe oder eines Hydraulikmotors proportionalen Pumpenzustandsignales mit einem Durchflußsensor und einem Drucksensor in der Ab- bzw. Zuleitung des Hydraulikmittels zur Ermittlung eines Durchflußsignales und eines Drucksignales, dadurch gekennzeichnet, daß die Differenz zwischen einem dem Pumpen- bzw. Motorleerlauf entsprechenden Leerlauf-Durchflußsignal und dem Durchflußsignal sowie das Drucksignal über eine vorgegebene Integrationszeit integriert werden und die integrierte Differenz durch das integrierte Drucksignal dividiert wird.

3. Anordnung zur Ermittlung eines der Leckage einer Hydraulikpumpe oder eines Hydraulikmotors proportionalen Pumpenzustandssignales, wobei in der Ab- bzw. Zuleitung des Hydraulikmittels ein Durchflußsensor sowie ein Drucksensor vorgesehen sind, dadurch gekennzeichnet, daß der Ausgang des Drucksensors (7) mit dem Eingang eines ersten Integrierers (9) verbunden ist, der zur Integration des Drucksignales (p) über eine vorbestimmte Integrationszeit $(\tau)$ eingerichtet ist, daß der Ausgang des Durchflußsensors (8) mit dem Eingang eines zweiten Integrierers (10) verbunden ist, der zur Integration des Durchflußsignales (f) über die Integrationszeit $(\tau)$ eingerichtet ist, daß ein Multiplizierer (11) vorgesehen ist, dem ein dem Pumpen- bzw. Motorleerlauf entsprechendes Leerlauf-Durchflußsignal $(f_o)$ zugeführt ist und der zur Multiplikation dieses Signales $(f_o)$ mit der Integrationszeit $(\tau)$ eingerichtet ist, daß ein Subtrahierer (12) vorgesehen ist, dessen Eingänge mit dem Ausgang des Multiplizierers (11) und mit dem Ausgang des zweiten Integrierers (10) verbunden sind und daß ein Dividierer (13) vorgesehen ist, dessen Eingänge mit dem Ausgang des Subtrahierers (12) und mit dem Ausgang des ersten Integrierers (9) verbunden sind (Fig. 2).

4. Anordnung zur Ermittlung eines der Leckage einer Hydraulikpumpe oder eines Hydraulikmotors proportionalen Pumpenzustandsignales, wobei in der Ab- bzw. Zuleitung des Hydraulikmittels ein Durchflußsensor sowie ein Drucksensor vorgesehen sind, dadurch gekennzeichnet, daß der Ausgang des Durchflußsensors (8) mit einem Eingang eines Subtrahierers (14) verbunden ist, dessem anderen Eingang ein dem Pumpen- bzw. Motorleerlauf entsprechendes Leerlauf-Durchflußsignal $(f_o)$ zugeführt ist, daß der Ausgang des Drucksensors (7) mit dem Eingang eines ersten Integrierers (9) und der Ausgang des Subtrahierers (14) mit dem Eingang eines zweiten Integrierers (15) verbunden sind, wobei beide Integrierer (9, 15) zur Integration ihrer Eingangssignale über eine vorbestimmte Integrationszeit ($\tau$) eingerichtet sind, und daß ein Dividierer (13) vorgesehen ist, dessen Eingänge mit den Ausgängen des zweiten Integrierers (15) sowie des ersten Integrierers (9) verbunden sind (Fig. 2a).

Fig.1

Fig.2

Fig. 2a

Fig. 3